# EUROPÄISCHE PATENTSCHRIFT

(11) **EP 4 374 482 B1**
(45) Veröffentlichungstag und Bekanntmachung des Hinweises auf die Patenterteilung: **03.09.2025**
(21) Anmeldenummer: 22754829.4
(22) Anmeldetag: 20.07.2022
(51) Int. Cl.: H02K 5/22, F04D 13/06

(54) **PUMPE MIT AM MOTORGEHÄUSE MONTIERTEM ELEKTRONIKGEHÄUSE**
PUMP HAVING ELECTRONICS HOUSING MOUNTED ON THE MOTOR HOUSING
POMPE POURVUE D'UN BOÎTIER ÉLECTRONIQUE MONTÉ SUR LE CARTER DE MOTEUR

(30) Priorität: 22.07.2021 DE 102021118958
(43) Veröffentlichungstag der Anmeldung: 29.05.2024
(73) Patentinhaber: KSB SE & Co. KGaA, 67227 Frankenthal (DE)
(72) Erfinder: KRILL, David, 67227 Frankenthal (DE); SECKINGER, Tobias, 67227 Frankenthal (DE)
(86) Internationale Anmeldenummer: PCT/EP2022/070328
(87) Internationale Veröffentlichungsnummer: WO 2023/001878

(56) Entgegenhaltungen:
- EP-A1- 1 560 319
- EP-A1- 3 136 570
- DE-A1- 10 005 505
- DE-U1- 20 207 233

## Beschreibung

Die Erfindung betrifft eine Pumpe umfassend einen Antriebsmotor mit Motorgehäuse sowie wenigstens ein Elektronikgehäuse, wobei zwischen Elektronikgehäuse und Motorgehäuse des Antriebsmotors ein flächiges Zwischenstück eingebracht ist.

Moderne Pumpen, insbesondere Kreiselpumpen, werden oftmals drehzahlgeregelt betrieben. Die hierfür notwendige Steuerungs- bzw. Regelungselektronik wird zunehmend komplexer und regelmäßig innerhalb eines separaten Elektronikgehäuses untergebracht, das umfangs- oder stirnseitig am Motorgehäuses angebracht wird. Für den Motorbetrieb ist eine elektrische Verbindung zwischen Elektronik und Motor, insbesondere Stator erforderlich, wobei entsprechende Leitungsverbindungen ausreichend gegenüber der Umgebung abzudichten sind, um Kurzschlüsse und Leitungskorrosionen zu vermeiden. Gleichzeitig soll jedoch der Montageprozess der Pumpen möglichst einfach gehalten werden.

Bei der Pumpenentwicklung ist zudem die Forderung der europäischen Union nach durchdachten Recyclingkonzepten zur Vermeidung von Elektroschrott zu berücksichtigen. Aktuelle Heizungsumwälzpumpen sind konstruktiv so ausgelegt, dass bei einem Defekt einer Komponente, wie beispielsweise der Elektronik, stets der gesamte Pumpenkopf, d.h. Antriebsmotor, Laufeinheit und Elektronik, auszutauschen ist. Es ist jedoch wünschenswert, dass zukünftige Pumpendesigns einen einfachen Austausch von Einzelkomponenten, wie bspw. der Elektronik, ermöglichen.

Das Dokument DE10005505A1 offenbart ein Elektronikgehäuse für eine elektrisch angetriebene Pumpe und das Dokument DE102019206641A1 offenbart einen elektrischen Bremsmotor mit einer Kontaktvorrichtung.

Vor diesem Hintergrund besteht die Aufgabe der vorliegenden Erfindung im Aufzeigen eines neuen Konstruktionskonzeptes, das eine möglichst einfache Verbindung zwischen Elektronikgehäuse und Motorgehäuse erlaubt.

Gelöst wird diese Aufgabe durch eine Pumpe gemäß den Merkmalen des Anspruchs 1. Vorteilhafte Ausführungen der Pumpe sind Gegenstand der abhängigen Ansprüche.

Erfindungsgemäß wird vorgeschlagen, zwischen Elektronikgehäuse und Motorgehäuse ein flächiges Zwischenstück einzubringen, das ein oder mehrere Metalleinleger aufweist, die sich durch das Zwischenstück erstrecken und eine elektrische Verbindung zwischen Elektronikgehäuse und Antriebsmotor bereitstellen. Das Zwischenstück bildet somit eine Art Verbindungsadapter für die elektrische Kontaktierung zwischen Antriebsmotor und Pumpenelektronik zur Steuerung bzw. Regelung des Motors. Gleichzeitig kann das Zwischenstück auch einen mechanischen Verbindungsadapter bilden.

Zur Vereinfachung des Montageprozesses bei der Befestigung des Elektronikgehäuses auf bzw. an dem Motorgehäuse kann vorgesehen sein, zunächst das Zwischenstück am Motorgehäuse anzubringen. Um die eingebetteten Metalleinleger des Zwischenstückes problemlos mit den korrespondierenden Anschlüssen im Motorgehäuse in Kontakt zu bringen, weist das Zwischenstück im Bereich wenigstens eines Metalleinlegers einen Durchbruch zur Ausbildung eines Sichtfensters auf. Durch dieses Sichtfenster kann der Monteur die Position der Metalleinleger des Zwischenstückes relativ zu den Anschlussstellen im Motorgehäuse beobachten und kontrollieren, d.h. das Sichtfenster bietet dem Monteur direkten Sichtkontakt ohne zusätzliche Hilfsmittel auf die Metalleinleger bei der Heranführung an die korrespondierenden Anschlüsse im Motorgehäuse bis zu deren Verbindung bzw. Kontaktschluss. Die nachfolgende Beschreibung bezieht sich überwiegend auf den Fall, dass das Zwischenstück zunächst am Motorgehäuse montiert wird. Der Grundgedanke der Erfindung mit der Bereitstellung des Sichtfensters ist jedoch auch für eine Ausführung der Erfindung anwendbar, die eine vorgelagerte Montage des Zwischenstückes am Elektronikgehäuse vorsieht. Die nachfolgenden Ausführungen gelten daher auch für eine solche Ausführung.

Es können ein oder mehrere Metalleinleger nebeneinander angeordnet sein, die sich insbesondere parallel zueinander durch das Zwischenstück erstrecken. Möglich ist die Anordnung auf einer gemeinsamen Kreislinie oder einer geraden Linie, die Metalleinleger können jedoch auch in Radialrichtung des kreisförmigen Zwischenstückes zueinander versetzt liegen. Die kreisförmige Ausformung des Zwischenstückes ist dann sinnvoll, wenn das Zwischenstück zur Befestigung an der Stirnseite des Motorgehäuses dient. Sinnvollerweise ist der Radius des Zwischenstücks auf den Radius der Stirnfläche angepasst.

Die ein oder mehreren Metalleinleger dienen vorzugsweise zur Verlängerung der Statoranschlüsse des Elektromotors. Im Falle eines dreiphasigen Elektromotors sind beispielsweise genau drei Metalleinleger vorgesehen, vorzugsweise liegen diese auf einer Kreislinie nebeneinander und erstrecken sich parallel zueinander von dem Motorgehäuse in Richtung des Elektronikgehäuses.

Optional ergibt sich durch das Zwischenstück eine zusätzliche Dichtwirkung, um den Schnittstellenbereich zwischen Motor- und Elektronikgehäuse gegenüber der Umgebung abzudichten. Insbesondere können zusätzliche Dichtelemente zwischen Motorgehäuse und Zwischenstück und/oder Zwischenstück und Elektronikgehäuse eingebracht sein. Sinnvollerweise sind hierfür passende Nuten am Motorgehäuse und/oder Zwischenstück und/oder Elektronikgehäuse zum Einlegen der Dichtungselemente vorgesehen. Bspw. können Dichtelemente bzw. Dichtringe in eine nahe des Aussenumfangs verlaufende Ringnut der Motorgehäusestirnseite und/oder des Zwischenstückes und/oder des Elektronikgehäuses eingesetzt sein.

Gemäß einer vorteilhaften Ausführungsform der Erfindung kann an wenigstens einer Seite des Zwischenstücks eine Schürze auskragen, insbesondere erstreckt sich die Schürze parallel zu wenigstens einem Metalleinleger. Idealerweise erstreckt sich diese zwischen Metalleinleger und Umfangsrand des Zwischenstückes. Bei der Montage des Zwischenstückes ragt die Schürze in den Innenraum des Motorgehäuses bzw. des Elektronikgehäuses hinein. Die Schürze bietet einen gesonderten Schutz für die freiliegenden Metalleinleger. Bspw. kann die Schürze die ein oder mehreren Metalleinleger elektrisch isolieren, insbesondere von der elektrisch leitfähigen Wand des Motorgehäuses.

Ferner kann vorgesehen sein, dass auf der dem Elektronikgehäuse zugewandten Seite des Zwischenstückes wenigstens ein Stützelement auskragt, das als Lagerstelle für die Aufnahme wenigstens eines Bauteils des Elektronikgehäuses, insbesondere zur Aufnahme wenigstens einer Platine dient. Die ein oder mehreren Metalleinleger können sich innerhalb des Stützelementes erstrecken bzw. innerhalb einer Wandung des Stützelementes eingebettet sein, wobei die ein oder mehreren Metalleinleger am äußeren Ende des Stützelementes zur Kontaktierung mit korrespondierenden Anschlussstellen im Elektronikgehäuse freiliegen.

Der weibliche Part der Metalleinleger des Zwischenstückes, vorzugsweise derjenige zur Konnektierung des Motors, kann in Form von Flachsteckhülsen ausgestaltet sein, die auf passende Flachstecker im Motorgehäuse aufsteckbar sind. Es ist jedoch genauso denkbar, dass die Metalleinleger endseitig Flachstecker ausbilden, die in die passenden Flachsteckhülsen innerhalb des Motoranschlusses einsteckbar sind.

Besonders vorteilhaft ist es, wenn die Breite der Flachsteckhülsen, d.h. die Breite der Hülse, größer dimensioniert ist als die Breite der korrespondierenden Flachstecker. Bevorzugt ist die Hülsenbreite im Bereich von 5%-20%, vorzugsweise im Bereich zwischen 7%-15%, größer dimensioniert als die Breite der Flachstecker. Durch die größere Dimensionierung ergibt sich ein gewisses Spiel zwischen Hülse und Stecker, so dass gewisse Abweichungen der Relativposition der Flachstecker oder Flachsteckhülsen zum Motorgehäuse ausgleichbar sind. Bspw. kann es vorgekommen, dass die Anschlüsse des Elektromotors um einen gewissen Winkel um die Motordrehachse versetzt zur erwarteten Normposition liegen. Ein solcher Versatz lässt sich durch das resultierende Spiel in gewissem Maße ausgleichen.

Zur Verbindung des Elektronikgehäuses mit dem Motorgehäuse wird das Elektronikgehäuse am bereits motorseitig montierten Zwischenstück befestigt. Das Elektronikgehäuse kann mehrteilig aufgebaut sein, wobei während der Pumpenmontage zunächst der Bodenteil des Elektronikgehäuses angebracht wird und im Folgeschritt wenigstens eine Elektronikplatine in das Bodenteil unter gleichzeitiger Kontaktierung mit den Metalleinlegern des Zwischenstückes eingesetzt wird.

Zur Vereinfachung des Verbindungsschrittes zwischen Zwischenstück und Elektronikgehäuse können ein oder mehrere, von der dem Elektronikgehäuse zugewandten Seite des Zwischenstückes auskragende Zentrierstifte vorgesehen sein, die durch passende Bohrungen des Bodenteils des Elektronikgehäuses durchführbar sind. Idealerweise liegen die Zentrierstifte im Bereich der Metalleinleger, besonders bevorzugt sind diese Bestandteil des Stützelementes.

Sind die Zentrierstifte ausreichend lang dimensioniert, können diese gleichzeitig zur Vorzentrierung der Elektronikplatine dienen, indem diese ebenfalls durch Bohrungen der Platine durchführbar sind.

Das Bodenteil des Elektronikgehäuses kann ein Kühlkörper sein und aus einem thermisch leitenden Material, insbesondere Aluminium, gefertigt sein. In diesem Fall sorgt das Zwischenstück für eine thermische sowie elektrische Entkopplung zwischen Motorgehäuse und Elektronikgehäuse.

Die Fixierung des Elektronikgehäuseteils, insbesondere des Kühlköpers, am Elektromotor kann über eine oder mehrere Schraubverbindungen erfolgen, die ausgehend vom Boden durch fluchtende Bohrungen des Zwischenstückes in passsende Gewinde auf der Stirnseite des Motors einschraubbar sind. Um den Zugang zu den Schraubverbindungen auch bei eingesetzter Platine sicherzustellen, kann die Platine mit Öffnungen versehen sein, die den Zugang zu den Schraubenköpfen auch bei eingebauter Platine ermöglichen. Dies ermöglicht eine Demontage des Elektronikgehäuses vom Antriebsmotor ohne Ausbau der Platine. Auch wird hierdurch die Montage eines neuen Elektronikgehäuses nebst Elektronik gewährleistet, wobei das Elektronikgehäuse und Platine bereits vormontiert sein können.

Bei der Pumpe handelt es sich bevorzugt um eine Kreiselpumpe, besonders bevorzugt eine Inline-Pumpe. Die Pumpe kann als Nassläuferpumpe und/oder Heizungsumwälzpumpe ausgestaltet sein.

Weitere Vorteile und Eigenschaften der Erfindung solle nachfolgend anhand eines in den einzelnen Abbildungen gezeigten Ausführungsbeispiels näher erläutert werden. Es zeigen:
- Figuren 1a bis 1c:: unterschiedliche Ansichten des Zwischenstücks einer erfindungsgemäßen Pumpe,
- Figuren 2 bis 5:: perspektivische Seitenansichten der erfindungsgemäßen Pumpe während des Montageprozesses und
- Figur 6:: eine Schnittdarstellung im Verbindungsbereich zwischen Motorgehäuse und Elektronikgehäuse mit eingesetztem Zwischenstück.

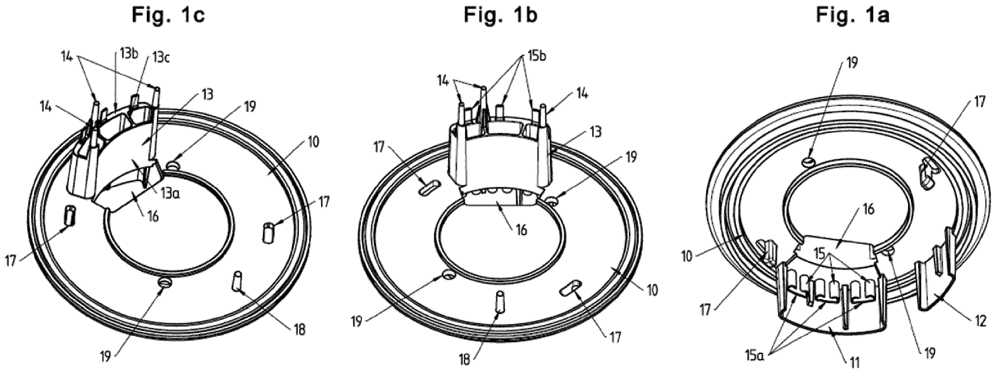

Die Figuren 1a bis 1c zeigen unterschiedliche perspektivische Ansichten des zwischen Motorgehäuse 1 und Elektronikgehäuse 2 einzusetzenden Zwischenstücks 10. Figur 1a zeigt eine Draufsicht auf die Unterseite des kreisrunden Zwischenstücks 10, die in Montagelage an der Stirnseite des Motorgehäuses 1 anliegt. In den beiden Figuren 1b und 1c ist die Oberseite des Zwischenstückes zu sehen, auf der das Elektronikgehäuse 2 aufgesetzt wird.

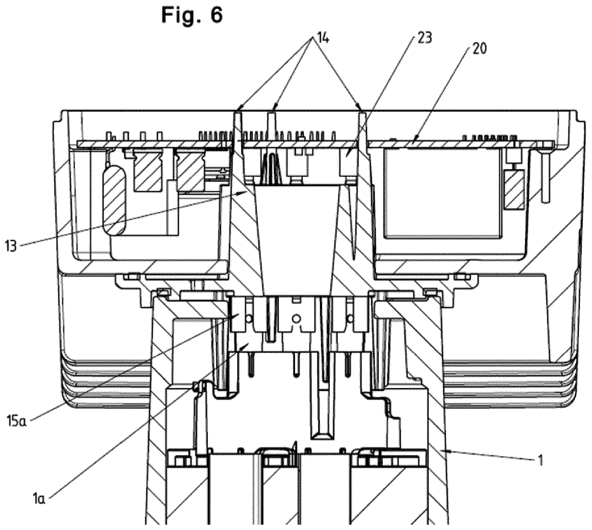

Das Zwischenstück 10 ist aus einem thermisch sowie elektrisch nichtleitenden Material gefertigt, beispielsweise Kunststoff. In das Zwischenstück 10 sind mindestens drei Metalleinleger 15 eingebettet, mittels dieser eine elektrische Verbindung zwischen den elektrischen Anschlüssen des Stators im Motorgehäuse 1 und der Pumpenelektronik innerhalb des Elektronikgehäuses 2 bereitgestellt werden soll. Die entsprechenden Anschlussstellen zur Konnektierung der Statoranschlüsse stellen den weiblichen Part einer Steckverbindung dar und sind vorliegend als Flachsteckhülsen 15a ausgeführt, die auf korrespondierende Flachstecker 1a des Stators (siehe Figur 6) innerhalb des Motorgehäuses 1 aufgesteckt werden.

Zwischen dem äußeren Rand des Zwischenstückes 10 und den Metalleinlegern 15 erstreckt sich senkrecht von der Zwischenstückoberseite und parallel zu den Flachsteckhülsen 15a eine Schürze 11 in Richtung des Motorgehäuses 1. Die Schürze überragt das freie Ende der Flachsteckhülsen 15a und taucht beim Zusammenfügen des Zwischenstückes 10 und dem Motorgehäuse 1 in den Innenraum des Motorgehäuses 1 ein, wodurch die Flachsteckhülsen 15a gleichzeitig von der Gehäusewand des Motorgehäuses 1 isoliert werden.

Eine weitere Schürze 12 liegt auf einem Kreisradius etwas versetzt zur Schürze 11, erstreckt sich jedoch ebenso parallel zur Schürze 12 senkrecht von der Oberfläche des Zwischenstückes 10 in Richtung des Motorgehäuses 1. Die Schürze 12 taucht ebenfalls in das Motorgehäuse ein und dient zur Isolation des Sternschaltpunktes des Motors.

Die beiden, um 180° versetzt liegende Rastnasen 17 dringen bei der Montage auf dem Motorgehäuse 1 in die passenden Öffnungen 1b ein und verrasten im Gehäuseinneren mit passenden Rastkanten, wodurch eine positionsgetreue Arretierung des Zwischenstückes 10 auf dem Motorgehäuse 1 sichergestellt ist. Die Bohrungen 19 dienen zur Durchführung von Schrauben für die zusätzliche Fixierung.

Auf der Oberseite des Zwischenstückes 10, die in den Figuren 1b und 1c dargestellt ist, erstreckt sich senkrecht von der Zwischenstückoberfläche ein Stützelement 13, das durch zwei in Radialrichtung versetzt liegende und parallel zueinander verlaufende Wandungen 13a, 13b und sich dazwischen erstreckende Rippen 13c gebildet ist. Innerhalb der äußeren Wandung 13b verlaufen die Metalleinleger 15 parallel zueinander. Am freien Ende des Stützelementes 13 treten die Metalleinleger 15 aus der Wandung 13b heraus und bilden freiliegende Flachstecker 15b für die Kontaktierung mit passenden Steckplätzen 23 der Elektronikplatine 20.

Das Stützelement 13 dient zum Schutz und zur Stabilisierung der Metalleinleger 15. An den Randbereichen sind stiftartige Verlängerungen vorgesehen, wodurch insgesamt drei Zentrierstifte 14 ausgebildet werden, die durch passende Bohrungen der Platine 20 durchgeführt werden und diese innerhalb des Gehäuses 2 zentrieren. Auch die Zentrierstifte 14 werden durch das Stützelement stabilisiert und geschützt. Optional kann das Stützelement auch zur Aufnahme und Lagerung der Elektronikplatine 20 dienen.

Ein weiterer Zentrierstift 18 liegt um 180° versetzt zum Stützelement 13 und ragt ebenso in Richtung des Elektronikgehäuses 2. Dieser Positionierstift 18 dient zur Zentrierung des aufgesetzten Elektronikgehäuses 2, das vorliegend aus einem am Zwischenstück 10 anliegenden Kühlkörper und einem nicht dargestellten Gehäusedeckel gebildet ist. Der Kühlkörper bildet den Bodenteil des Elektronikgehäuses. Der Positionierstift 18 durchdringt den am Zwischenstück 10 anliegenden Kühlkörper und ragt in den Innenraum des Elektronikgehäuses 2 hinein. Der Kühlkörper umfasst einen Durchbruch, durch den das Stützelement 13 in das Gehäuseinnere hineinragen kann. Zusammen mit dem Positionierstift 18 sorgt das Stützelement 13 für eine exakte Ausrichtung des Elektronikgehäuses 2 zum Zwischenstück 10 und mittelbar zum Motorgehäuse 1.

Das Zwischenstück 10 weist weiterhin einen zum Stützelement 13 radial innenliegenden Durchbruch 16 als Sichtöffnung auf, wodurch der Monteur beim Aufsetzen des Zwischenstücks 10 auf dem Motorgehäuse 1 die Flachstückhülsen 15a sehen und die Konnektierung mit den Flachsteckern 1a kontrollieren kann.

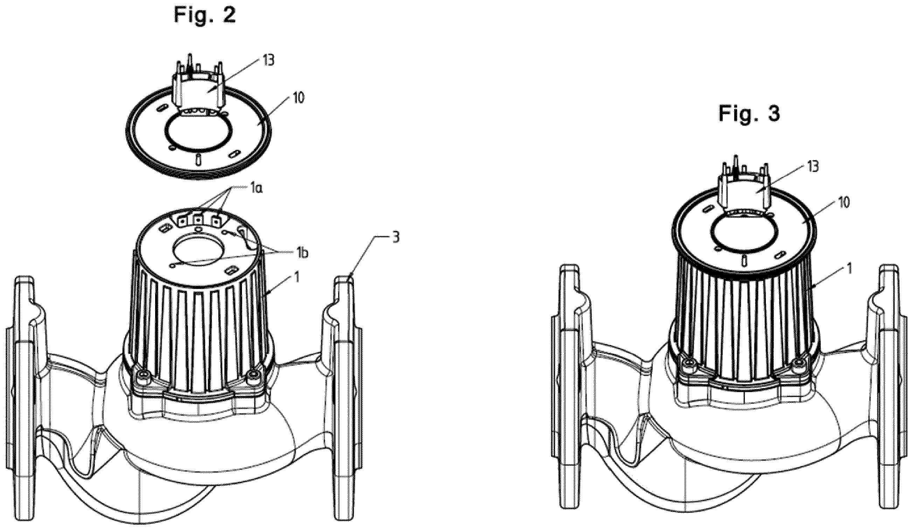

Der Montageprozess ist chronologisch in den Figuren 2 bis 5 dargestellt. Figur 2 zeigt den hydraulischen Teil 3 der erfindungsgemäßen Pumpe 3, die hier exemplarisch als Heizungsumwälzpumpe ausgeführt ist. Mit dem Hydraulikteil 3 ist der Antriebsmotor 1 über vier Schraubverbindungen verbunden. Erkennbar ist hier, dass stirnseitig am Motorgehäuse 1 eine Aussparung mit den freiliegenden Flachsteckern 1a des Stators vorgesehen ist. Das Zwischenstück 10, dessen Kreisfläche auf die Stirnseite des Elektromotorgehäuses 1 angepasst ist, wird nun stirnseitig auf das Motorgehäuse 1 aufgesetzt, wobei die Flachsteckhülsen 15a des Zwischenstückes 10 auf die Flachstecker 1a des Stators aufgesteckt werden, was der Monteur durch das Sichtfenster 16 kontrollieren kann.

Gleichzeitig taucht die Schürze 11 in die Ausnehmung des Motorgehäuses 1 ein und sorgt gleichzeitig für eine elektrische Isolation der hergestellten Kontaktstellen zwischen Stator und Zwischenstück 10 gegenüber der metallischen Motorgehäusewand.

Ein wesentlicher Aspekt besteht darin, dass die Breite der Flachstückhülsen 15a größer dimensioniert ist als die Breite der Flachstecker 1a, sodass hier ausreichend Spiel und somit Montagetoleranz beim Zusammensetzen des Zwischenstückes 10 und Elektromotorgehäuses 1 sichergestellt ist. Insbesondere können hier Abweichungen der tatsächlichen Position wenigstens eines der Flachstecker von einer Normposition relativ zum Motorgehäuse 1 ausgeglichen werden.

Ist das Zwischenstück 10 auf der Stirnseite des Motorgehäuses 1 aufgesetzt, kann der Kühlkörper des Elektronikgehäuses 2 auf dem Zwischenstück 10 montiert werden.

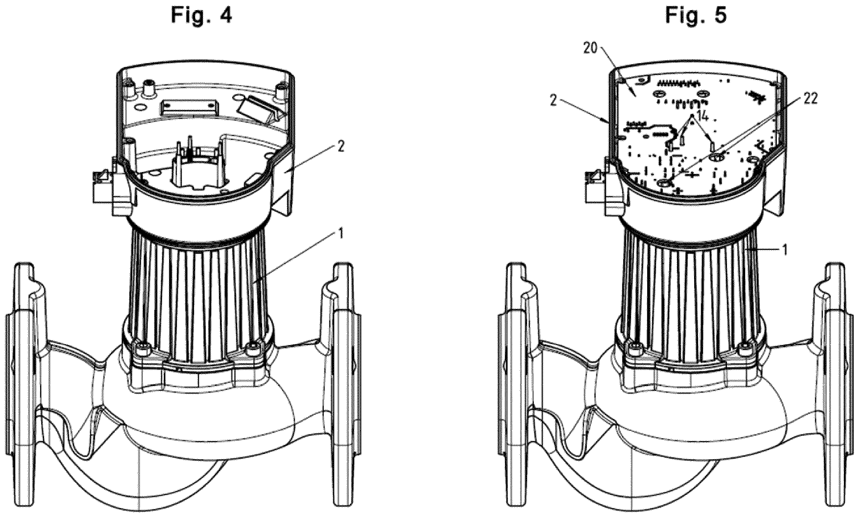

Wie der Figur 4 zu entnehmen ist, erstreckt sich das Stützelement 13 durch einen passgenauen Durchbruch im Boden des Kühlkörpers, sodass der Kühlkörper als auch die entsprechenden Kontaktstellen 15b für den Statoranschluss frei im Innenraum des Kühlkörpers liegen.

Im Anschluss dazu kann die Elektronikplatine 20 in den Kühlkörper 2 eingesetzt werden, was mit Hilfe der durch die Bohrungen der Platine 20 durchgeführten Zentrierstifte 14 vereinfacht wird. Ferner stützt sich die Elektronikplatine 20 auf dem Stützelement 13 ab.

Über die Bohrungen 22 der Elektronikplatine 20 lassen sich Schrauben bei eingesetzter Platine 20 durch die Bohrungen des Kühlkörpers und des Zwischenstückes 10 in die Gewinde 1b des Motorgehäuses eindrehen, wodurch das gesamte Elektronikgehäuse 2 mit dem Motorgehäuse 1 verschraubt werden kann. Figur 6 zeigt nochmal eine Schnittdarstellung entlang der Motorachse im Bereich der Verbindungsstelle zwischen Elektronikgehäuse 2 und Motorgehäuse 1. Erkennbar sind hier die geschlossenen Kontaktstellen zwischen den Flachsteckern 1a und den Flachsteckhülsen 15a des Zwischenstückes 10. Auf der anderen Seite sind die Flachstecker 15b des Zwischenstückes 10 in entsprechende Kontaktstellen 23 der Platine 20 eingesteckt, sodass eine elektrische Kontaktierung zwischen Stator und Elektronik gewährleistet ist.

Ein weiterer Vorteil neben der vereinfachten Montagemöglichkeit des gesamten Pumpenaufbaus besteht darin, dass bei einem Defekt der Elektronik die Platine 20 nebst Elektronikgehäuse 2 unkompliziert durch das Öffnen der Schrauben vom Motor demontiert und durch ein Ersatzteil ausgetauscht werden kann. Aufgrund der vereinfachten Steckverbindung und die Verwendung des Zwischenstückes 10 wird ein solcher Austausch der Elektronikplatine bzw. des gesamten Elektronikgehäuses theoretisch auch für den technischen Laien möglich, denn bei dem erfindungsgemäßen Aufbau muss die Platine nicht separat ausgebaut werden, sondern es erfolgt der Wechsel des gesamten Elektronikgehäuses nebst integraler Platine. Durch die Vorzentrierung des Elektronikgehäuses durch das Stützelement 13 sowie der bereits im Elektronikgehäuse enthaltenen Platine 20 aufgrund der Zentrierstifte 14 ist sichergestellt, dass die Flachstecker 15b des Zwischenstückes 10 in die Kontaktstellen 23 der Platine 20 ordnungsgemäß eingesetzt werden.

## Patentansprüche

1. Pumpe umfassend einen Antriebsmotor mit Motorgehäuse (1) sowie wenigstens ein Elektronikgehäuse (2), wobei zwischen Elektronikgehäuse (2) und Motorgehäuse (1) des Antriebsmotors ein flächiges Zwischenstück (10) eingebracht ist,
**dadurch gekennzeichnet,**
**dass** das Zwischenstück (10) ein oder mehrere integrierte Metalleinleger (15) aufweist, die sich durch das Zwischenstück (10) erstrecken und eine elektrische Verbindung zwischen Elektronikgehäuse (2) und Antriebsmotor bereitstellen, wobei das Zwischenstück (10) im Bereich wenigstens eines Metalleinlegers (15) ein Sichtfenster (16) aufweist, um bei der Montage des Zwischenstückes (10) auf dem Motorgehäuse (1) oder dem Elektronikgehäuse (2) einen Blick auf den Kontaktschluss des wenigstens einen Metalleinlegers (15) mit dem korrespondierenden Anschluss (1a, 23) des Antriebsmotors oder der Elektronik innerhalb des Elektronikgehäuses (2) zu ermöglichen.

2. Pumpe nach Anspruch 1, **dadurch gekennzeichnet, dass** mehrere Metalleinleger (15) nebeneinander auf einer Kreislinie oder einer geraden Linie angeordnet sind.

3. Pumpe nach einem der vorstehenden Ansprüche, **dadurch gekennzeichnet, dass** das Zwischenstück (10) eine flache, kreisrunde Platte ist, die an einer Stirnseite des Motorgehäuses (1) angeordnet ist.

4. Pumpe nach einem der vorstehenden Ansprüche, **dadurch gekennzeichnet, dass** von wenigstens einer Seite des Zwischenstückes (10) eine Schürze (11, 12) auskragt, insbesondere parallel zu wenigstens einem Metalleinleger (15).

5. Pumpe nach Anspruch 4, **dadurch gekennzeichnet, dass** die wenigstens eine Schürze (11, 12) in das Motorgehäuse (1) oder das Elektronikgehäuse (2) hineinragt.

6. Pumpe nach Anspruch 5, **dadurch gekennzeichnet, dass** die wenigstens eine Schürze (11) in eine Öffnung des Motorgehäuses (1) hineinragt, wodurch der korrespondierende Anschluss (1a, 15a) im Motorgehäuse (1) von einer Wand des Motorgehäuses elektrisch isoliert ist.

7. Pumpe nach einem der vorstehenden Ansprüche, **dadurch gekennzeichnet, dass** die Metalleinleger (15) weibliche oder männliche Steckanschlüsse (15a), insbesondere Flachsteckhülsen oder Flachstecker, zur Verbindung mit dem korrespondierenden Anschluss des Motorgehäuses (1) ausbilden, wobei die Breite der Flachsteckhülse vorzugsweise zwischen 5%-20%, insbesondere 7% bis 15%, größer dimensioniert ist als die Breite der korrespondierenden Flachstecker (1a).

8. Pumpe nach einem der vorstehenden Ansprüche, **dadurch gekennzeichnet, dass** auf der dem Elektronikgehäuse (2) zugewandten Seite des Zwischenstückes (10) ein oder mehrere Zentrierstifte (14) auskragen, die durch korrespondierende Bohrungen einer Elektronikplatine (20) durchgeführt sind.

9. Pumpe nach einem der vorstehenden Ansprüche, **dadurch gekennzeichnet, dass** auf der dem Elektronikgehäuse (2) zugewandten Seite des Zwischenstückes (10) wenigstens ein Stützelement (13) ausgeformt ist, das sich durch eine Ausnehmung des Elektronikgehäusebodens in den Innenraum des Elektronikgehäuses (2) erstreckt und optional eine Lagerstelle zur Aufnahme einer Elektronikplatine (20) bildet, wobei die ein oder mehreren Metalleinleger (15) vorzugsweise in eine Wand (13b) des Stützelementes (13) eingebettet sind und an dessen freien Ende austreten.

10. Pumpe nach einem der vorstehenden Ansprüche, **dadurch gekennzeichnet, dass** das Elektronikgehäuse (2) zumindest teilweise aus einem metallischen Kühlkörper besteht, wobei der Kühlkörper am Motorgehäuse (1) montierbar ist und eine thermische und/oder elektrische Isolierung zwischen Motorgehäuse (1) und Kühlkörper mittels des Zwischenstückes (10) erfolgt.

11. Pumpe nach Anspruch 10, **dadurch gekennzeichnet, dass** das Elektronikgehäuse (2), insbesondere der Kühlkörper mittels ein oder mehrerer, durch das Zwischenstück (10) durchgeführter Schrauben verbunden ist, wobei die Schraubenköpfe idealerweise durch Bohrungen (22) innerhalb der Platine (20) zugänglich sind, so dass eine Demontage des Kühlkörpers bei eingesetzter Platine (20) möglich ist.

12. Pumpe nach einem der vorstehenden Ansprüche, **dadurch gekennzeichnet, dass** die Pumpe eine Kreiselpumpe, bevorzugt Inline-Pumpe, besonders bevorzugt Heizungsumwälzpumpe ist.

## Claims

1. Pump comprising a drive motor having a motor housing (1) and comprising at least one electronics housing (2), wherein a flat intermediate piece (10) is inserted between the electronics housing (2) and the motor housing (1) of the drive motor,
**characterized**
**in that** the intermediate piece (10) has one or more integrated metal inserts (15) which extend through the intermediate piece (10) and provide an electrical connection between the electronics housing (2) and the drive motor, wherein the intermediate piece (10) has a viewing window (16) in the region of at least one metal insert (15) in order to allow sight of the contact closure of the at least one metal insert (15) with the corresponding connection (1a, 23) of the drive motor or the electronics inside the electronics housing (2) when fitting the intermediate piece (10) on the motor housing (1) or the electronics housing (2).

2. Pump according to Claim 1, **characterized in that** several metal inserts (15) are arranged next to each other on a circular line or a straight line.

3. Pump according to either of the preceding claims, **characterized in that** the intermediate piece (10) is a flat, circular plate, which is arranged on an end face of the motor housing (1).

4. Pump according to any of the preceding claims, **characterized in that** a skirt (11, 12) projects from at least one side of the intermediate piece (10), in particular parallel to at least one metal insert (15).

5. Pump according to Claim 4, **characterized in that** the at least one skirt (11, 12) protrudes into the motor housing (1) or the electronics housing (2).

6. Pump according to Claim 5, **characterized in that** the at least one skirt (11) protrudes into an opening in the motor housing (1), as a result of which the corresponding connection (1a, 15a) in the motor housing (1) is electrically insulated from a wall of the motor housing.

7. Pump according to any of the preceding claims, **characterized in that** the metal inserts (15) form female or male plug-in connections (15a), in particular flat plug-in sleeves or flat plugs, for connection to the corresponding connection of the motor housing (1), wherein the width of the flat plug-in sleeve is preferably between 5%-20%, in particular 7% to 15%, greater than the width of the corresponding flat plug (1a).

8. Pump according to any of the preceding claims, **characterized in that** one or more centring pins (14), which are guided through corresponding holes in an electronics board (20), project from the side of the intermediate piece (10) facing the electronics housing (2).

9. Pump according to any of the preceding claims, **characterized in that** at least one supporting element (13), which extends through a recess of the electronics housing bottom into the interior of the electronics housing (2) and optionally forms a bearing point for receiving an electronics board (20), is formed on the side of the intermediate piece (10) facing the electronics housing (2), wherein the one or more metal inserts (15) are preferably embedded in a wall (13b) of the supporting element (13) and exit at the free end of the supporting element.

10. Pump according to any of the preceding claims, **characterized in that** the electronics housing (2) at least partially consists of a metallic heat sink, wherein the heat sink can be fitted on the motor housing (1) and thermal and/or electrical insulation is provided between the motor housing (1) and the heat sink by means of the intermediate piece (10).

11. Pump according to Claim 10, **characterized in that** the electronics housing (2), in particular the heat sink, is connected by means of one or more screws which are guided through the intermediate piece (10), wherein the screw heads are ideally accessible through holes (22) within the circuit board (20), so that disassembly of the heat sink is possible with the circuit board (20) inserted.

12. Pump according to any of the preceding claims, **characterized in that** the pump is a centrifugal pump, preferably an in-line pump, particularly preferably a heating circulation pump.

## Revendications

1. Pompe comprenant un moteur d'entraînement pourvu d'un carter de moteur (1) ainsi qu'au moins un boîtier électronique (2), une pièce intermédiaire plane (10) étant insérée entre le boîtier électronique (2) et le carter de moteur (1) du moteur d'entraînement,
**caractérisée en ce que**
la pièce intermédiaire (10) présente un ou plusieurs éléments rapportés métalliques intégrés (15) qui s'étendent à travers la pièce intermédiaire (10) et établissent une liaison électrique entre le boîtier électronique (2) et le moteur d'entraînement, la pièce intermédiaire (10) présentant au niveau d'au moins un élément rapporté métallique (15) une fenêtre d'inspection (16) permettant de contrôler visuellement, lors du montage de la pièce intermédiaire (10) sur le carter de moteur (1) ou le boîtier électronique (2), l'établissement de contact entre le ou les éléments rapportés métalliques (15) et la borne (1a, 23) correspondante du moteur d'entraînement ou de l'électronique à l'intérieur du boîtier électronique (2).

2. Pompe selon la revendication 1, **caractérisée en ce que** plusieurs éléments rapportés métalliques (15) sont disposés côte à côte sur une ligne circulaire ou une ligne droite.

3. Pompe selon l'une des revendications précédentes, **caractérisée en ce que** la pièce intermédiaire (10) est une plaque plane circulaire disposée sur une face avant du carter de moteur (1).

4. Pompe selon l'une des revendications précédentes, **caractérisée en ce qu'**une jupe (11, 12) dépasse d'au moins un côté de la pièce intermédiaire (10), en particulier parallèlement à au moins un élément rapporté métallique (15).

5. Pompe selon la revendication 4, **caractérisée en ce que** la ou les jupes (11, 12) font saillie dans le carter de moteur (1) ou le boîtier électronique (2).

6. Pompe selon la revendication 5, **caractérisée en ce que** la ou les jupes (11) font saillie dans une ouverture du carter de moteur (1), ce qui isole électriquement la borne (1a, 15a) correspondante dans le carter de moteur (1) d'une paroi du carter de moteur.

7. Pompe selon l'une des revendications précédentes, **caractérisée en ce que** les éléments rapportés métalliques (15) forment des connecteurs mâles ou femelles (15a), en particulier des douilles plates ou des fiches plates, pour la connexion à la borne correspondante du carter de moteur (1), la largeur de la douille plate étant de préférence dimensionnée de façon que sa taille soit supérieure de 5 % à 20 %, notamment de 7 % à 15 %, à la largeur des fiches plates (1a) correspondantes.

8. Pompe selon l'une des revendications précédentes, **caractérisée en ce que**, sur le côté de la pièce intermédiaire (10) tourné vers le boîtier électronique (2), une ou plusieurs broches de centrage (14) font saillie et sont amenées à passer à travers des perçages correspondants d'une carte électronique (20).

9. Pompe selon l'une des revendications précédentes, **caractérisée en ce que**, sur le côté de la pièce intermédiaire (10) tourné vers le boîtier électronique (2), est formé au moins un élément de support (13) qui s'étend à travers un évidement du fond du boîtier électronique dans l'espace intérieur du boîtier électronique (2) et forme facultativement un point d'appui destiné à recevoir une carte électronique (20), le ou les éléments rapportés métalliques (15) étant de préférence intégrés dans une paroi (13b) de l'élément de support (13) et sortant à son extrémité libre.

10. Pompe selon l'une des revendications précédentes, **caractérisée en ce que** le boîtier électronique (2) est constitué au moins en partie d'un dissipateur thermique métallique, le dissipateur thermique pouvant être monté sur le carter de moteur (1) et une isolation thermique et/ou électrique entre le carter de moteur (1) et le dissipateur thermique étant réalisée au moyen de la pièce intermédiaire (10).

11. Pompe selon la revendication 10, **caractérisée en ce que** le boîtier électronique (2), notamment le dissipateur thermique, est relié au moyen d'une ou plusieurs vis passant à travers la pièce intermédiaire (10), les têtes de vis étant idéalement accessibles à travers des perçages (22) à l'intérieur de la carte (20), de sorte qu'un démontage du dissipateur thermique est possible lorsque la carte (20) est en place.

12. Pompe selon l'une des revendications précédentes, **caractérisée en ce que** la pompe est une pompe centrifuge, de préférence une pompe en ligne, et de façon particulièrement préférée un circulateur de chauffage.
